# EUROPÄISCHE PATENTANMELDUNG

(11) **EP 0 732 232 A1**
(43) Veröffentlichungstag der Anmeldung: **18.09.1996**
(21) Anmeldenummer: 96103140.8
(22) Anmeldetag: 01.03.1996
(51) Int. Cl.: B60H 1/22, F24H 3/06

(54) **Luftheizgerät für die Innenluft von Fahrzeugen mit einer durch ein Schutzgitter abgedeckten Ansaugöffnung**

(30) Priorität: 16.03.1995 DE 29504536 U
(71) Anmelder: Firma J. Eberspächer, D-73730 Esslingen (DE)
(72) Erfinder: Görtler, Thomas, 89264 Weissenhorn (DE)

(57) **Zusammenfassung**

Die vorliegende Erfindung bezieht sich auf ein Luftheizgerät für die Innenluft von Fahrzeugen mit einer durch ein Schutzgitter abgedeckten Ansaugöffnung für die zu erwärmende Luft. Zur Beseitigung der Problematik einer ungewollten negativen Beeinträchtigung der Luftansaugverhältnisse ist erfindungsgemäß das Schutzgitter (2) ein die Ansaugöffnung mit radialem und axialem Abstand überdeckender etwa topfförmiger Gitterkorb mit einem Öffnungsrand, der bei die Ansaugöffnung abdeckendem Zustand etwa formschlüssig und abstandsnah bzw. -frei an einem an dem Rand der Ansaugöffnung flächenschlüssig angrenzenden Wandbereich des Heizgerätes anliegt.

## Beschreibung

Die Erfindung betrifft ein Luftheizgerät für die Innenluft von Fahrzeugen mit einer durch ein Schutzgitter abgedeckten Ansaugöffnung für die zu erwärmende Luft.

Bei bisher bekannten Geräten dieser Art deckt das Schutzgitter die Ansaugöffnung jeweils eben ab. In vielen Fällen liegt die Ansaugöffnung in einem von dem Heizgerät abragenden Stutzen mit einem relativ geringen Durchmesser.

Das Schutzgitter verkleinert den freien Strömungsquerschnitt für die anzusaugende Luft an der Ansaugöffnung.

Luftheizgeräte für die Innenluft von Fahrzeugen werden bei Nutzkraftfahrzeugen häufig in der Fahrerkabine an nicht besonders geschützten Stellen eingebaut. So werden die gattungsgemäßen Luftheizgeräte teilweise hinter den Fahrersitzen installiert.

Es kommt in der Praxis vor, daß unbedacht in der Nähe eines Luftheizgerätes abgelegte Teile wie beispielsweise Putzlappen oder Kleidung an die Ansaugöffnung angesaugt werden und diese dadurch vollständig zugedeckt bzw. verstopft wird. Dies führt zu einer Abschaltung bzw. Beschädigung durch Überhitzung des Heizgerätes.

In Fällen, in denen ein Heizgerät nicht serienmäßig in ein Fahrzeug eingebaut ist, sondern von dem Fahrzeugbetreiber oder einer Werkstatt nachgerüstet wird, kann es vorkommen, daß die Ansaugöffnung des Luftheizgerätes durch unsachgemäßen Einbau keinen vorgeschriebenen Abstand von benachbarten Fahrzeugteilen besitzt. Dadurch können die Einströmverhältnisse für die anzusaugende Luft negativ beeinträchtigt werden, worunter die Funktion des Gerätes leidet.

Mit Bezug auf die vorgenannte Problematik einer ungewollten negativen Beeinträchtigung der Luftansaugverhältnisse wird als Verbesserung eine Lösung nach den kennzeichnenden Merkmalen des Anspruchs 1 vorgeschlagen.

Diese Lösung beruht auf dem Gedanken, unabhängig von der tatsächlichen Größe der Ansaugöffnung eine möglichst große Schutzgitterfläche zu schaffen. Dadurch wird an dem Schutzgitter eine relativ geringe Ansauggeschwindigkeit geschaffen, wodurch wiederum die Gefahr des Ansaugens eines versehentlich in der Nähe des Luftheizgerätes abgelegten Teiles, wie beispielsweise eines Putzlappens, erheblich vermindert bzw. in der Regel ganz ausgeschlossen wird. Durch die Ausbildung des Schutzgitters in der Form eines Korbes existiert bei dem erfindungsgemäßen Schutzgitter kein ausschließlich ebener Bereich, so daß selbst bei einem Ansaugen eines losen Teiles allenfalls ein Teilbereich der Schutzgitter-Ansaugfläche abgedeckt würde.

Zur einwandfreien Funktion eines Luftheizgerätes soll vor der Ansaugöffnung für die zur Erwärmung anzusaugende Luft ein bestimmter Freiraum verbleiben. Bei einem Schutzgitter nach der erfindungsgemäßen Lehre ist dieser Freiraum auch bei einem nachträglichen Einbau des Luftheizgerätes immer gewährleistet, wenn das Schutzgitter mit seiner Gitterfläche ausreichend weit von der eigentlichen Ansaugöffnung des Heizgerätes entfernt liegt, d.h. die Größe des Schutzgitters verhindert einen unsachgemäßen Einbau des Luftheizgerätes mit einem zu geringen Abstand der Ansaugöffnung gegenüber benachbarten Fahrzeugteilen.

Da das korbförmige Schutzgitter nach der Erfindung die Ansaugöffnung möglichst axial und radial überragen soll, ist innerhalb des Schutzgitterkorbes eine Halterung vorgesehen, mit der das Schutzgitter direkt an dem Rand der Ansaugöffnung befestigt werden kann.

In vielen Fällen liegt die Ansaugöffnung in einem axial von dem Heizgerät abragenden Stutzen, der einen geringeren Außendurchmesser besitzt als das angrenzende Gehäuse des Luftheizgerätes. In diesen Fällen ist es zweckmäßig, den Außendurchmesser des Schutzgitter-Korbes den Außenabmessungen des Gehäuses anzupassen. Hierdurch ergibt sich dann auch eine optisch recht ansprechende Lösung. Das Schutzgitter kann aus dem gleichen Material wie das Gehäuse des Luftheizgerätes bestehen und zwar insbesondere aus Kunststoff.

Bei einem Luftheizgerät die Ansaugöffnung in einen von dem Gehäuse des Luftheizgerätes abragenden Stutzen mit gegenüber dem Gehäuse geringeren Durchmesser zu legen, bietet die Möglichkeit, die Ansaugöffnung für das Luftheizgerät über eine an den Stutzen anzuschließende Leitung an eine andere Stelle zu verlegen. In solchen Fällen, in denen das Heizgerät aus dem genannten Grund einen Stutzen aufweist, ist das Aufsetzen eines korbförmigen Schutzgitters dann besonders vorteilhaft, wenn in einem konkreten Anwendungsfall gerade kein zusätzliches Ansaugleitungsstück verwendet werden soll. Denn dann kann das Luftheizgerät durch das korbförmige Schutzgitter eine den Stutzen verdeckende gemeinsame beispielsweise etwa zylindrische Außenform erhalten. Durch Abnahme des Schutzgitters kann bei dem gleichen Luftheizgerät bei einer anderen Einbausituation wiederum ein Anschlußleitungsstück zum Ansaugen der Luft an den gehäuseseitig vorgesehenen Ansaugstutzen angeschlossen werden.

Ein Ausführungsbeispiel ist in der Zeichnung dargestellt.

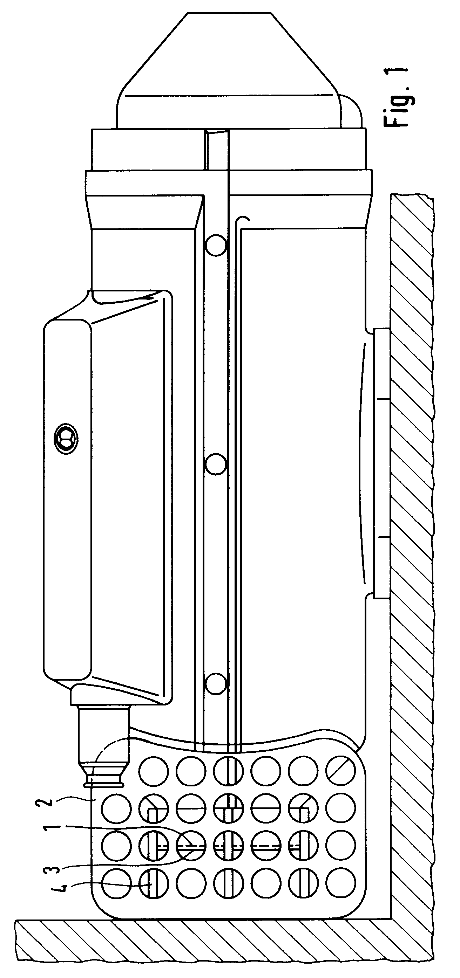

Es zeigen
- Fig. 1: eine Frontansicht eines Luftheizgerätes mit aufgesetztem Schutzgitter-Korb,

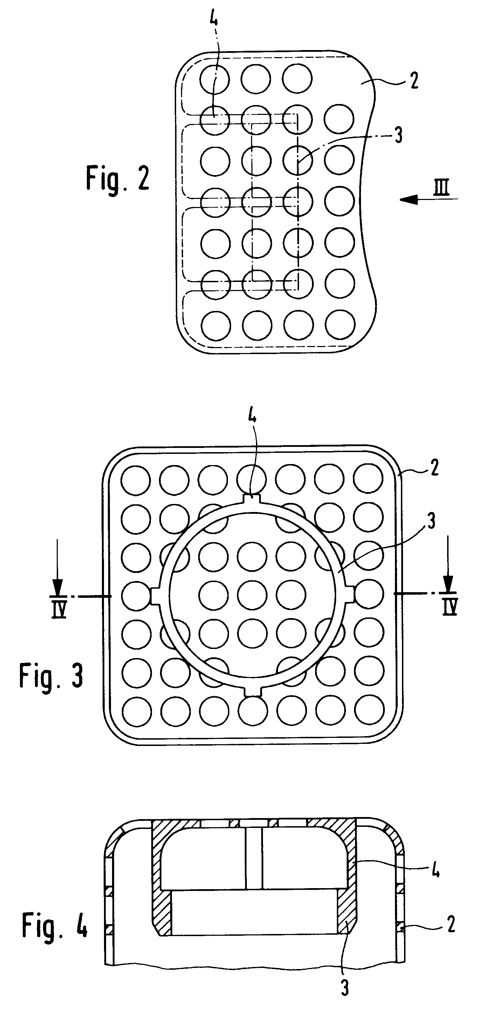

- Fig. 2: eine Frontansicht lediglich des Schuztgitter-Korbes,
- Fig. 3: eine Ansicht auf den Schutzgitter-Korb nach dem Pfeil III in Fig. 2,
- Fig. 4: einen Schnitt durch den Schutzgitter-Korb nach Linie IV-IV in Fig. 3.

An einem axialen Ende des Gehäuses eines Luftheizgerätes ist ein Luftansaugstutzen 1 angeformt. Im Durchmesser ist dieser Luftansaugstutzen geringer als das sich an diesen anschließende Gehäuse des Heizgerätes.

Auf den Luftansaugstutzen 1 ist axial ein korbförmiges Schutzgitter 2 aufgesetzt. Die Außenkontur dieses Schutzgitters 2 entspricht in radialer Richtung der etwa zylindrischen Außenkontur des Heizgeräte-Gehäuses. In radialer Richtung ragt die Stirnfläche des Schutzgitters 2 um ein solches Maß über die Ansaugöffnung des Luftansaugstutzens 1 hinaus, wie es für eine einwandfreie Funktion des Heizgerätes als Abstand zu dem nächsten Bauteil vorgeschrieben ist.

Der Öffnungsrand des korbförmigen Schutzgitters 2 ist derart ausgebildet, daß er etwa form- und flächenschlüssig an die angrenzende Kontur des Heizgerät-Gehäuses angepaßt ist. Dies ist notwendig, damit an der Anschlußstelle zu dem Gehäuse kein Spalt entstehen kann, durch den größere Teile in das Heizgerät eingesaugt werden können.

Die im Inneren des Schutzgitters 2 vorgesehene Halterung, mit der dieses Schutzgitter auf dem Luftansaugstutzen 1 zu befestigen ist, ist ein Ring 3, der von axial an die Stirnwand des Schutzgitters 2 angeformten Rippen 4 gehalten ist. Mit diesem Ring 3 kann das Schutzgitter 2 auf den Ansaugstutzen 1 des Heizgerätes klemmfest, jedoch lösbar, aufgeschoben werden.

Der Ring 3 kann auf seinem Umfang zwischen den Rippen 4 axial verlaufende Schlitze aufweisen, um durch elastische Verspannung auf den Ansaugstutzen aufklemmbar zu sein.

## Patentansprüche

1. Luftheizgerät für die Innenluft von Fahrzeugen mit einer durch ein Schutzgitter abgedeckten Ansaugöffnung für die zu erwärmende Luft,
**dadurch gekennzeichnet**,
daß das Schutzgitter (2) ein die Ansaugöffnung mit radialem und axialem Abstand überdeckender etwa topfförmiger Gitterkorb mit einem Öffnungsrand ist, der bei die Ansaugöffnung abdeckendem Zustand etwa formschlüssig und abstandsnah bzw. -frei an einem an dem Rand der Ansaugöffnung flächenschlüssig angrenzenden Wandbereich des Heizgerätes anliegt.

2. Luftheizgerät nach Anspruch 1,
**dadurch gekennzeichnet,**
daß die Ansaugöffnung innerhalb eines etwa senkrecht von dem Gehäuse des Heizgerätes abragenden Luftansaugstutzen (1) liegt und innerhalb des Gitterkorbes eine diesen an dem Stutzenrand fixierende Halterung (Rippen 3) vorgesehen ist.

3. Luftheizgerät nach Anspruch 1 oder 2,
**dadurch gekennzeichnet,**
daß der Luftansaugstutzen (1) mit der Ansaugöffnung in Achsrichtung des Heizgeräte-Gehäuses angeordnet ist und einen im Vergleich zu dem Außendurchmesser eines etwa in seinem Grundbereich zylindrischen Heizgeräte-Gehäuses kleineren Durchmesser besitzt und daß der auf den Luftansaugstutzen (1) aufsetzbare Gitterkorb (Schutzgitter 2) in seinem Außendurchmesser etwa jenem Gehäusedurchmesser angepaßt ist.
